# EUROPEAN PATENT APPLICATION

(11) **EP 2 623 842 A2**
(43) Date of publication of application: **07.08.2013**
(21) Application number: 13153745.8
(22) Date of filing: 01.02.2013
(51) Int. Cl.: F16L 55/172

(54) **Clamp seal**

(30) Priority: 01.02.2012 GB 201201699
(71) Applicant: STATS (UK) Limited, Aberdeen Aberdeenshire AB11 6DN (GB)
(72) Inventor: Bowie, Angus George, Aberdeen, AB51 8XF (GB)
(74) Representative: Shanks, Andrew

(57) **Abstract**

A clamp (10) has body portions (12) adapted to be secured together and a longitudinally arranged seal device (14) for sealing between the body portions (12). The seal device (14) is located in a groove (38) provided in an interface surface (39) of one of the body portions (12) and, in use, the seal device (14) provides sealing between the clamp portions (12).

## Description

### Field of the Invention

This invention relates to a seal for a clamp and to a clamp having said seal.

### Background to the Invention

Clamps are utilised in a wide range of industries and applications where it is desired to temporarily or permanently secure objects together. By way of example, pipe clamps may be secured around damaged or leaking pipework in order to permit repairs to be carried out, for pressure containment, maintaining pressure integrity or the like. A number of annular seals are typically provided on one or both of the clamp portions which, in use, seal against the outside of the pipe to which the clamp is secured to prevent leakage between the pipe and the clamp.

While clamps such as those described above are used successfully in numerous applications, there are a number of drawbacks associated with the design, construction and operation of clamps, in particular those used in high pressure pipe applications.

One issue is the difficulty in maintaining a leak tight face seal between the clamp portions. As clamps are typically constructed from two generally c-shaped clamp portions having flanges at their interface which are bolted together to secure the clamp portions together, a face seal is required between the clamp portions to prevent a leak path forming at the interface between the flanges of the clamp portions.

In order to maintain the face seal, the bolt load must apply and maintain sufficient contact pressure when the internal pressure is applied to maintain the face seal. However, it will be recognised that the internal pressures in the pipe can be significant and also vary significantly over time, such that selecting an appropriate bolt load capability to function optimally in all cases can be difficult if not impossible.

Furthermore, for high pressure applications, significant flange strength is required to resist the bending moments generated by the internal pressure against the bolt load. Further still, the surfaces of the flange interface must be manufactured to a tight tolerance and fine surface finish to maintain the required sealing contact.

These issues are compounded in applications where dual sealing is required as the pitch from the bolt load to the inner seal offers a greater moment arm, increasing the likelihood that the required sealing contact will be lost.

### Summary of the Invention

According to a first aspect of the present invention there is provided a clamp having a plurality of body portions adapted to be secured together, the clamp comprising a longitudinally arranged seal device for sealing between the body portions of the clamp.

The clamp may comprise a single seal device. In particular embodiments, the clamp comprises a plurality of seal devices. Where a plurality of seal devices is provided, at least one seal device may be provided in each body portion of the clamp. In preferred embodiments, one seal device may be provided for each interface between the body portions. For example, where two body portions are provided with two interfaces therebetween, one seal device may be provided on a first of the body portions and seal one of the interfaces and another seal device may be provided on the other of the body portions and seal the other of the interfaces.

The clamp may further comprise a groove in which the seal device is adapted to be located. The seal device may comprise or define a seal insert for location in the groove.

The seal device may be of any suitable form and construction. The seal device may have an I-shaped cross section, for example constructed from rectangular section bar with grooves cut along the sides. The seal device may be adapted for location in the body groove so that the seal device grooves are enclosed within the body portion.

The seal device may further comprise at least one seal element adapted for location in the seal device grooves and in preferred embodiments, one seal element is provided in each seal device groove. Because the sealing elements are enclosed within the body portion, they are less vulnerable to damage during handling of the clamp.

The seal element(s) may be of any suitable form and construction. In particular embodiments, the seal element(s) may comprise an o-ring seal, although it will understood that any suitable seal can be used where appropriate.

An annulus may be provided between the seal elements. The annulus may be accessed via a port which communicates with the body groove. In use, the annulus may be pressure tested to prove the face seal is pressure competent.

The body portions of the clamp may be of any suitable form and construction. For example, each body portion may comprise a generally c-shaped body having flanges for facilitating connection between the body portions. Any suitable connection may be used. In particular embodiments, a bolted flange connection may be provided, the flanges provided with bores for receiving bolts therethrough.

The clamp may further comprise at least one end seal for providing sealing between the clamp and a pipe. The end seal(s) may be of any suitable form or construction. In particular embodiments, the end seal(s) may comprise an annular compression seal. A single end seal may be provided. However, in preferred embodiments, a plurality of end seals are provided at each end of the body portions.

According to a further aspect of the present invention there is provided a seal for a clamp according to the first aspect.

It should be understood that the features defined above in accordance with any aspect of the present invention or below in accordance with any specific embodiment may be utilised, either alone or in combination with any other defined feature, in any other aspect of the invention.

### Brief Description of the Drawings

These and other aspects of the present invention will now be described, by way of example only, with reference to the accompanying drawings, in which:
Figure 1 is a perspective view of a clamp portion of a clamp showing a seal insert according to an embodiment of the present invention;
Figure 2 shows an enlarged perspective view of part of the clamp portion shown in Figure 1, showing an end portion of the seal insert;
Figure 3 shows an enlarged perspective view of part of the clamp portion shown in Figures 1 and 2, showing the interface between the seal insert and a compression seal of the clamp; and
Figure 4 shows an enlarged perspective view of an end part of the seal insert with compression seal removed.

### Detailed Description of the Drawings

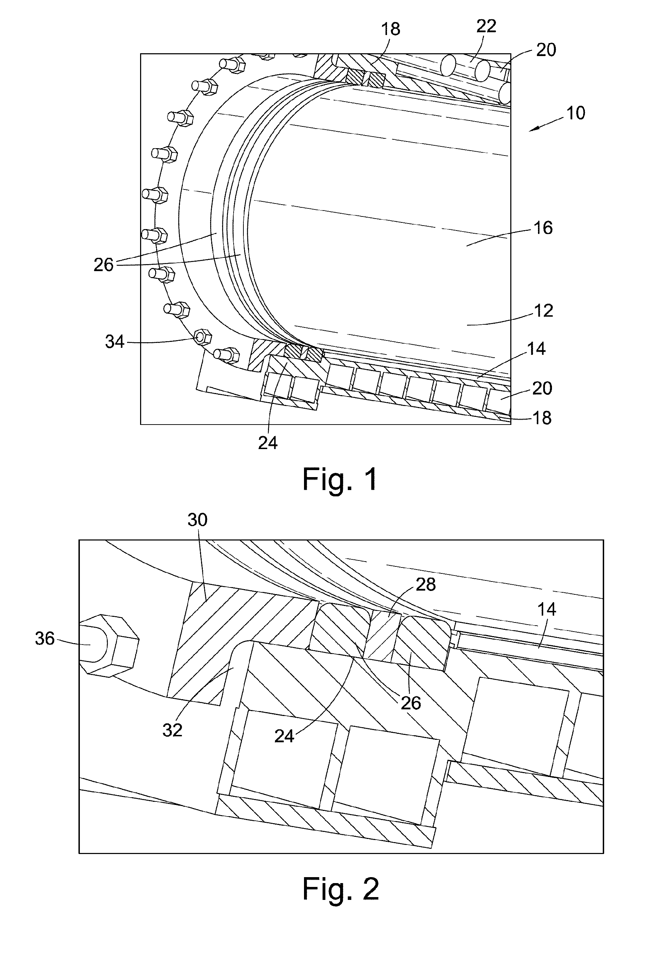

Referring first to Figure 1, there is shown a perspective view of part of a clamp 10 according to an embodiment of the present invention, the clamp 10 having clamp portions 12 (one clamp portion 12 is shown for clarity) and a seal insert 14 for sealing between the clamp portions 12.

As shown in Figure 1, the clamp portion 12 comprises a generally c-shaped body 16 having flanges 18. Bores 20 are provided in the flanges 18 and are adapted to receive bolts 22 therethrough, the bolts 22 securing the clamp portions 12 together to form the clamp 10.

An end portion of the clamp portion 12 has a recess 24 on which are mounted two annular compression seals 26, the compression seals 26 engaging a pipe (not shown for clarity) in use and acting to prevent leakage of fluid between the pipe and the clamp portions 12 of the clamp 10. The second compression seal 26 provided at each end of the body 16 offers dual seal capability.

An annular spacer 28 is provided between the compression seals 26. In addition, an L-shaped end cap 30 is provided and engages the recess 24 and an end face 32 of the body 16. The end cap 30 has bores 34 for receiving bolts 36, the bolts 36 securing the end cap 30 to the end face 32 of the body 16.

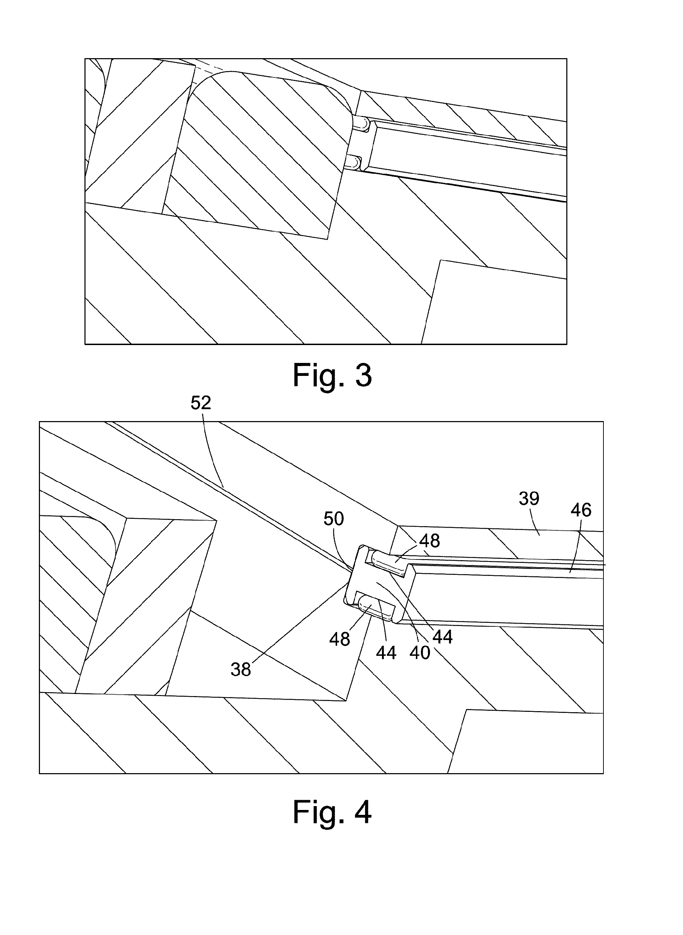

As shown most clearly in Figure 4, a groove 38 is provided in the interface surface 39 of the body 16 inboard of the flange 18. Seal insert 14 is located in the groove 38 and, in use, the seal insert 14 provides sealing between the clamp portions 12. Beneficially, the seal insert 14 provides sealing at the interface 39 and so is not subject to deflection resulting from the bending moments that may otherwise be present in the flange 18.

It will be recognised that a second groove 38 will also be provided on the opposing clamp portion (not shown) which, in use, seals against the body surface 42.

The groove 38 is rectangular and is provided with lead chamfers (not shown) on its top edges.

The seal insert 14 is constructed from rectangular section bar 40 with grooves 44 (shown most clearly in Figures 3 and 4) cut along the sides 46 so that the insert has an i-beam shaped cross section. As can be seen from Figure 4 for example, the grooves 44 are provided on the sides 46 perpendicular to the interface surface 39.

A seal element in the form of o-ring seal 48 is located in each groove 44, although it will understood that any suitable pressure energised seal can be used where appropriate.

The annulus 50 between the seal elements 44 can be accessed via a port 52 which communicates with the rectangular groove 38. In use, the annulus 50 can be pressure tested to prove that both inner and outer face seals are pressure competent.

In use, one seal insert 40 is inserted into each clamp portion 12 before the clamp 10 is assembled, the seal inserts 40 sealing each of the interfaces between the clamp portions 12. The compression seals 26 also seal against the ends of the seal elements 44.

Beneficially, embodiments of the present invention can accommodate up to 1 mm flange separation under load.

In addition, because the sealing surfaces are on the sides of the grooves, they are less vulnerable to damage during handling of the clamps.

Moreover, the system provides dual sealing with annulus test capability.

Accordingly, a clamp having a seal insert according to the present invention may be lighter and require less bolt pre-load than a traditional face seal clamp.

It should be understood that the embodiment described herein is merely exemplary and that various modifications may be made thereto without departing from the scope of the invention.

For example, a further annular groove can be cut in the end face of the clamp in line with the seal insert to verify that the compression seal to seal insert seal is leak tight.

## Claims

1. A clamp having a plurality of body portions adapted to be secured together, the clamp comprising a longitudinally arranged seal device for sealing between the body portions of the clamp.

2. The clamp of claim 1, wherein the clamp comprises a single seal device.

3. The clamp of claim 1, wherein the clamp comprises a plurality of seal devices.

4. The clamp of claim 3, wherein at least one seal device is provided on each body portion of the clamp.

5. The clamp of claim 3, wherein a plurality of seal devices are provided in one of the body portions.

6. The clamp of claim 3, 4 or 5, wherein a seal device is provided for each interface between the body portions.

7. The clamp of any preceding claim, wherein at least one of the body portions comprises a groove for receiving a seal device, and optionally wherein the seal device comprises or defines a seal insert for location in the groove.

8. The clamp of any preceding claim, wherein the seal device has an I-shaped cross section.

9. The clamp of any preceding claim, wherein the seal device comprises at least one groove for receiving a seal element, and optionally wherein the seal element comprises an o-ring seal.

10. The clamp of any preceding claim, wherein an annulus is provided between the seal elements.

11. The clamp of claim 10, wherein the annulus is accessed via a port, and optionally wherein the port communicates with the groove.

12. The clamp of any preceding claim, further comprising flanges for facilitating connection between the body portions.

13. The clamp of any preceding claim, further comprising at least one end seal for providing sealing between the clamp and a pipe, and optionally wherein the at least one end seal comprises a compression seal.

14. The clamp of claim 13, comprising either:
a single end seal; or
a plurality of end seals provided at each end of the body portions.

15. A seal device for a clamp, the seal device adapted to be longitudinally arranged between body portions of the clamp to seal between the body portions.
